# FASCICULE DE BREVET EUROPEEN

(11) **EP 4 211 009 B1**
(45) Date de publication et mention de la délivrance du brevet: **11.06.2025**
(21) Numéro de dépôt: 21762070.7
(22) Date de dépôt: 29.07.2021
(51) Int. Cl.: B60W 30/12, B60W 30/18

(54) **PROCÉDÉ ET DISPOSITIF D'AIDE AU POSITIONNEMENT LATÉRAL D'UN VÉHICULE**
VERFAHREN UND VORRICHTUNG ZUR UNTERSTÜTZUNG DER SEITLICHEN POSITIONIERUNG EINES FAHRZEUGS
METHOD AND DEVICE FOR ASSISTING WITH THE LATERAL POSITIONING OF A VEHICLE

(30) Priorité: 10.09.2020 FR 2009154
(43) Date de publication de la demande: 19.07.2023
(73) Titulaire: Stellantis Auto SAS, 78300 Poissy (FR)
(72) Inventeur: VARNIER, Matthieu, 78320 LA VERRIERE (FR); GIRAUD, David, 92290 CHATENAY MALABRY (FR); LAHLOU, Zoubida, Casablanca, 20190 (MA)
(74) Mandataire: ESIP
(86) Numéro de dépôt international: PCT/FR2021/051420
(87) Numéro de publication internationale: WO 2022/053750

(56) Documents cités:
- FR-A1- 3 069 222
- US-A1- 2019 176 831

## Description

La présente invention revendique la priorité de la demande française 2009154 déposée le 10.09.2020.

L'invention concerne un procédé et un dispositif d'aide au positionnement latéral d'un véhicule.

Plus particulièrement, ledit véhicule est propre à être conduit par un conducteur de façon automatisé sur une voie de circulation selon un chemin de référence, ladite voie de circulation est limitée latéralement par deux bords, un bord droit et bord gauche. Les bords peuvent être des marquages au sol, parfois appelés lignes de rives. Également, les bords sont reconnaissables, par exemple, à l'aide d'un traitement d'images qui identifie par un changement de matériau, de couleur et/ou de texture du sol.

La délimitation longitudinale d'une voie de circulation, est délimitée par une distance entre deux points, entre deux axes transversaux, entre une distance entre le début et la fin de la voie. Une zone, une région, ou portion d'une voie de circulation est représentée par la surface de la voie de circulation délimitée latéralement et longitudinalement.

Une voie de circulation peut à un endroit donné se diviser en deux ou plusieurs voies. Cette multiplication des voies peut permettre à un véhicule, circulant sur ladite voie de circulation, de dépasser un autre véhicule qui le précède ou de se positionner sur le côté le plus adéquat par rapport à la circulation ou par rapport au trajet désiré par le conducteur du véhicule.

La zone d'élargissement d'une voie de circulation est délimitée longitudinalement par la région où la largeur de la voie augmente. Elle commence là où largeur de la voie commence à augmenter, donc après une voie initiale, et elle se termine là où un marquage marque la séparation des voies crées par l'élargissement de la voie initiale.

Des véhicules, en particulier automobile, circulent sur ces voies. Certains véhicules, conduit par un conducteur, sont propres à être conduit de façon automatisé selon un chemin de référence. Ils comprennent un dispositif d'aide au positionnement latéral par rapport aux délimitation latérales de la voie de circulation empruntée. Ce dispositif comprend des organes aptes à percevoir l'environnement (caméra, RADAR, LIDAR et autres télémètres), et en particulier le bord de la voie sur un horizon donné ou une distance donnée.

On connait par le document US2019176831 un appareil pour contrôler un changement de voie dans un véhicule. On connait par le document FR3069222 un procédé de fonctionnement d'un système d'assistance à la conduite du type assistance au centrage d'un véhicule dans une voie de circulation.

Il est connu que ces dits véhicules sont aptes à détecter le début d'une zone d'élargissement en surveillant la distance latérale entre les deux bords de la voie. Du fait de la limite de perception de l'environnement sur une distance donnée par les organes aptes à percevoir l'environnement, la détermination de la fin de la zone d'élargissement dès la détection du début de ladite zone d'élargissement n'est pas possible si le marquage, qui marque la séparation des voies crées par l'élargissement de la voie initiale, n'est pas détecté par ces dits organes. Il est connu que la détermination de la fin de la zone d'élargissement est réalisée au cours de la circulation dudit véhicule dans la zone d'élargissement., par exemple jusqu'à la détection d'un nouveau marquage qui marque la séparation des voies crées par l'élargissement de la voie initiale.

Certains dispositifs d'aide au positionnement latéral prennent comme chemin de référence la médiane aux bords de la voie de circulation. Lorsque c'est le cas, le véhicule sera mal positionné en fin de zone d'élargissement de voie de circulation. Il sera placé entre les deux nouvelles voies, donc au niveau du marquage de séparation qui sera créée entre ces deux voies. Le conducteur devra reprendre la main sur le dispositif et réaliser un déplacement latéral tardif avec un risque de heurt avec un autre véhicule réalisant un dépassement.

D'autres dispositifs d'aide au positionnement latéral prennent comme chemin de référence une distance fixe par rapport à un bord de la voie de circulation. Par contre, la trajectoire sélectionnée peut ne pas être la trajectoire souhaitée par le conducteur. Le choix de la voie de circulation finale par le dispositif d'aide au positionnement latéral, à l'issu de l'élargissement et de la séparation en au moins deux voies, sera vu comme arbitraire du point du vu du conducteur. Il devra alors le cas échéant suspendre l'assistance dans la zone d'élargissement afin de reprendre la main sur la conduite puis réactiver l'assistance après la fin de la zone d'élargissement.

Par ailleurs, ces dits dispositifs ne permettent pas de prendre en compte plusieurs chemin de référence dans la zone d'élargissement.

Un objet de la présente invention est d'améliorer le confort, la pertinence (caractère intuitif), et la sécurité de dispositifs d'aide à la conduite.

Cet objectif est résolu par l'invention telle que définie dans les revendications indépendantes.

Elle propose plus précisément à cet effet un procédé d'aide au positionnement latéral d'un véhicule, ledit véhicule étant propre à être conduit par un conducteur de façon automatisé sur une voie de circulation selon un chemin de référence, ladite voie de circulation est délimitée par deux bords, ledit procédé comprenant les étapes de :
- détection d'une prochaine division de ladite voie de circulation en au moins deux nouvelles voies ;
- détermination d'une zone d'élargissement de ladite voie de circulation ;
- détermination, dans ladite zone d'élargissement, des chemins de référence aptes à atteindre chaque nouvelle voie ;
- détermination d'une première et d'une deuxième sous zone de ladite zone d'élargissement fonction des chemins de référence et des bords ;

lorsque le véhicule est dans la première sous zone, le procédé comporte en outre une étape de sélection d'un premier chemin de référence parmi les chemins de référence déterminés, la sélection est faite à partir d'informations acquises par au moins un capteur dudit véhicule ;
lorsque le véhicule est dans la deuxième sous zone, le procédé comporte en outre une étape de sélection d'un deuxième chemin de référence parmi les chemins de références déterminés, la sélection est faite uniquement à partir d'au moins une action sur le volant par le conducteur.

Ainsi, plusieurs chemins de références sont déterminés. Selon le chemin de référence sélectionné, le véhicule est apte à atteindre, de façon automatisé, chaque nouvelle voie après la zone d'élargissement. Cependant, plus le véhicule est proche de la fin de la zone d'élargissement, plus un changement de chemin de référence, et donc une modification de la trajectoire du véhicule, sera dangereux (risque de collision avec un autre véhicule par exemple).

Il est alors nécessaire de partitionner, délimiter, la zone d'élargissement en deux sous zones. Ce partitionnement en sous zones est notamment fonction de la distance latérale, l'écart latéral, entre les chemins de référence et entre les bords. Ce partitionnement est alors systématique et robuste aux différentes formes (courbure, longueur, largeur) de zone d'élargissement.

Conceptuellement, la première sous zone représente une région où la distance latérale entre les chemins de référence est relativement faible. Cette distance varie de zéro à la largeur d'une demie voie environ et pouvant aller quasiment à la largeur d'une voie Tandis que la deuxième sous zone, représente une région où la distance latérale entre les chemins de référence devient de plus en plus importante.

Ainsi dans la première sous zone, où la distance latérale entre les chemins de référence est proche, il est possible d'adapter les aides à la conduite, comme le positionnement latéral, en fonction de l'environnement perçu sans compromettre le confort ou la sécurité ressentie par le conducteur et/ou les passagers. Le véhicule va pouvoir changer de voie de manière automatique sans action sensible du conducteur sur le volant (variation de rotation du volant ou du couple volant supérieur à un seuil prédéterminé).

Dans la première sous zone, la largeur de la voie reste suffisamment faible pour éviter d'être dépassé par un autre véhicule. Ainsi, il n'y a que très peu de risque d'un heurt lors de la modification automatique de positionnement latérale. Il n'est pas utile de suréquiper le véhicule avec des capteurs supplémentaires pour mesurer et analyser en temps réel ce qui se passe derrière le véhicule.

Par contre, si le véhicule est dans la deuxième sous zone, l'adaptation d'aides à la conduite, comme le positionnement latéral, ne doit se faire que sur une action du conducteur (et non simplement une contrainte de l'environnement. Le conducteur prend alors de fait la responsabilité du changement de trajectoire, notamment vis-à-vis du risque accru de collision). Ce changement de trajectoire de référence, sur action du conducteur et par le conducteur, est alors facilement compréhensible - puisqu'initié par l'usager- évitant ainsi un sentiment d'insécurité.

Cette méthode de sélection du chemin de référence présente le meilleur compromis entre le coût et la complexité des dispositifs de perception de l'environnement à prévoir, et apporte des effets positifs sur le confort et la sécurité.

Avantageusement, une information acquise par au moins un capteur dudit véhicule est le côté, gauche ou droit, de l'activation du clignotant.

C'est un moyen simple pour que le conducteur indique, dans la première sous zone, sur quelle voie, égo-voie ou voie adjacente, il souhaite que le véhicule doit être en fin de la zone d'élargissement (donc début de la zone aval). Le conducteur lève donc l'incertitude de la sélection du chemin de référence sans action sur le volant (variation de l'angle de rotation du volant et/ou du couple sur le volant inférieure à un seuil prédéterminé).

Avantageusement, une information acquise par au moins un capteur dudit véhicule est la détection d'un autre véhicule précédant et roulant plus lentement que ledit véhicule.

Un véhicule conduit de façon automatisé peut être régulé en vitesse par rapport à une vitesse consigne. En zone amont de la zone d'élargissement, le véhicule peut être régulé à une vitesse inférieure à la vitesse consigne à cause de la détection d'un véhicule le précédent et roulant plus lentement. L'arrivé dans une zone d'élargissement permet justement le dépassement d'un véhicule plus lent. Lorsque le véhicule est dans la zone d'élargissement, le procédé peut choisir le chemin de référence permettant de dépasser le véhicule qui précède de manière confortable (transition lisse) et sécuritaire.

Avantageusement, une information acquise par au moins un capteur dudit véhicule est une vitesse dudit véhicule inférieure ou supérieure à une vitesse consigne.

La vitesse consigne en zone amont peut être différente de la vitesse consigne en zone aval de la zone d'élargissement. Suivant l'écart en la vitesse du véhicule et les vitesse consignes, la sélection du chemin de référence est différente : par exemple sélectionner le chemin de référence de l'égo-voie si la vitesse consigne en zone aval est plus faible que la vitesse du véhicule (exemple arrivée à une barrière de péage sur autoroute), et sélectionner le chemin de référence de la voie adjacente si la vitesse de consigne en zone amont est plus forte que la vitesse véhicule (exemple voie d'accélération pour pouvoir doubler).

Avantageusement, une information acquise par au moins un capteur dudit véhicule est la position latérale dudit véhicule dans la zone d'élargissement de ladite voie de circulation.

Dans la première sous zone, le conducteur peut légèrement tourner le volant sans effort (variation de l'angle de rotation du volant et/ou du couple sur le volant inférieure à un seuil prédéterminé) pour placer le véhicule du côté droite ou gauche, voire même simplement résister légèrement (couple) à la rotation automatique du volant accompagnant le choix automatique d'un chemin ou l'autre. En fin de la première zone, suivant la position latérale courante le procédé va sélectionner le chemin de référence le plus proche par rapport à une coordonnée du véhicule (par exemple, le centre de gravité, le centre de l'essieu arrière, ...). Le véhicule sera alors amené en début de zone aval sur la voie indiquée par le conducteur, en suivant dans la deuxième sous zone le chemin de référence correspondant.

Avantageusement, l'action sur le volant par le conducteur est une rotation du volant et/ou un couple de rotation appliqué sur le volant.

Lorsque le véhicule est dans le deuxième sous zone, l'adaptation d'aides à la conduite, comme le positionnement latéral, ne doit se faire que sur une action du conducteur. Le conducteur peut même être amené à réaliser lui-même ce changement, pour des raisons de sécurité (capacité limitée du véhicule à percevoir des obstacles latéraux notamment), le procédé prenant alors acte du chemin de référence le plus proche suite à son action (accompagnement de la décision, adaptation de la trajectoire à la volonté du conducteur). Ce changement de trajectoire de référence sur action du conducteur est alors facilement compréhensible évitant ainsi un sentiment d'insécurité. Le conducteur étant maître de la trajectoire mesure les risques d'un déplacement latéral du véhicule.

Selon l'invention, le procédé comporte en outre les étapes de :
- calcul d'une distance longitudinale par rapport au début de ladite zone d'élargissement (204), la dite distance longitudinale est fonction des chemins de référence (212, 213) et des bords (202, 203) ;
- détermination d'une première sous zone (207) de ladite zone d'élargissement (204) comprise entre le début de ladite zone d'élargissement et la dite distance longitudinale, la détermination de la deuxième sous zone (208) correspond au complément de la dite première sous zone (207) par rapport à la zone d'élargissement (204).

Ainsi, il est possible de délimiter (partitionner) de façon précise et répétitive en deux sous zones distinctes la zone d'élargissement de la voie de circulation - le biseau de dédoublement de la voie. Cette délimitation est réalisée le véhicule roulant et peut être réactualisée pendant que le véhicule est dans la zone d'élargissement si de nouveaux éléments sont détectés ou précisés comme la fin de la zone d'élargissement. En effet, en début de zone d'élargissement les capteurs de perception de l'environnement du véhicule peuvent ne pas percevoir de manière certaine la fin de la zone d'élargissement. Cependant, un horizon proche du véhicule est perçu et permet de calculer les chemins de référence de l'égo voie et de de la voie adjacente en utilisant avantageusement les distances par rapports aux bords de la voie de circulation.

L'invention concerne aussi un dispositif d'aide au positionnement latéral d'un véhicule, ledit dispositif comprenant une mémoire associée à au moins un processeur configuré pour mettre en œuvre le procédé de l'invention.

L'invention concerne aussi un véhicule caractérisé en ce qu'il comprend l'aide au positionnement latéral d'un véhicule.

L'invention concerne aussi un programme d'ordinateur comprenant des instructions adaptées pour l'exécution des étapes du procédé d'aide au positionnement latéral d'un véhicule lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :
[Fig. 1] illustre schématiquement un véhicule selon un exemple de réalisation particulier de la présente invention.
[Fig. 2] illustre schématiquement les chemins de référence d'une zone d'élargissement d'une voie de circulation selon un exemple de réalisation particulier de la présente invention.
[Fig. 3] illustre schématiquement un procédé d'aide au positionnement latéral d'un véhicule, selon un exemple particulier de réalisation de la présente invention.
[Fig. 4] illustre schématiquement un calculateur, selon un exemple particulier de réalisation de la présente invention.

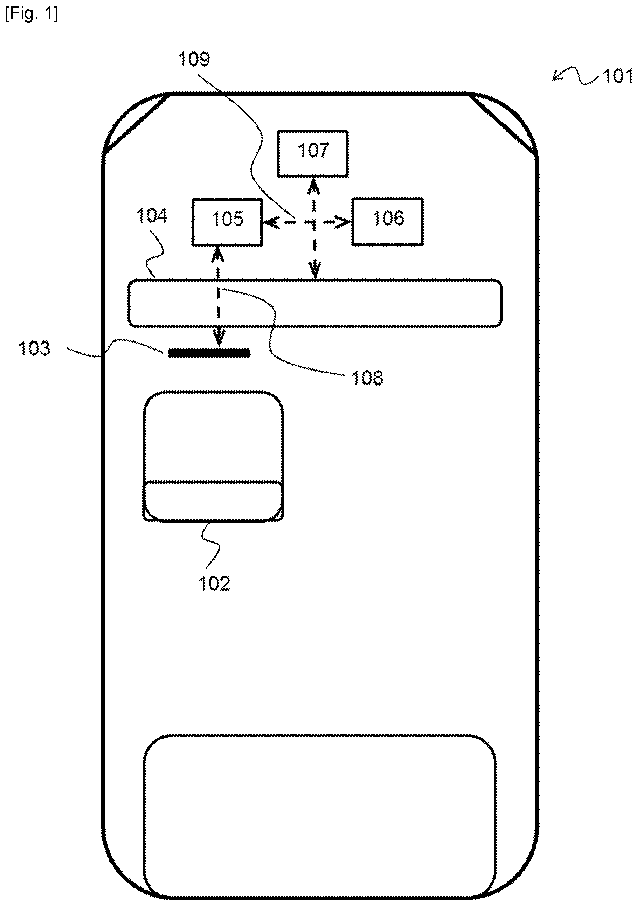

**La** **figure 1** montre un véhicule 101 où un fauteuil 102, un volant 103, un tableau de bord 104 et une ceinture de sécurité (non représentée) constituent le poste de conduite. Selon un mode de réalisation, le tableau de bord 104 comporte un cockpit, un système multimédia apte à afficher des informations audio-visuelles, un système d'affichage tête haute et/ou un système de climatisation/ventilation. Les places des passagers ne sont pas représentées.

Selon un autre mode de réalisation le volant 103 et/ou le tableau de bord 104 comporte au moins un boitier, commodo, qui regroupe différentes commandes d'un véhicule automobile : klaxon, clignotant, essuie-glace, feux de route, feux de croisement, feux de position, activation/désactivation d'aides à la conduite comme régulateur de vitesse, aide au positon de voie, etc., réglages et ou de paramétrage d'aides à la conduite, ....

Dans un mode de réalisation, le véhicule 101 comporte des organes d'aide à l'assistance à la direction 105 aptes à mesurer ou à estimer un angle/vitesse/rotation/couple volant à partir d'une action sur le volant par le conducteur. Ces organes sont également aptes à mesures et/ou estimer des déplacements/vitesses/accélérations linéaire ou angulaire et/ou à mesurer et/ou estimer des efforts sur le système de direction (volant, colonne, pignon, crémaillère, biellette, joints, pneus ...).

Ces organes 105 sont également aptes à piloter l'assistance de direction afin de pouvoir participer à un système d'aide au positionnement latérale.

Dans un mode de réalisation, ces organes 105 sont de type Direction à Assistance Electronique, de type à assistance hydraulique et/ou de type « by-wire » (Il y a une absence de lien mécanique directe entre le volant et les pneus).

Dans un mode de réalisation, le véhicule 101 comporte des organes 106 aptes à conduire le véhicule 101 de façon automatisé selon un chemin de référence sur une voie de circulation. En particulier, ces organes 106 proposent au conducteur du véhicule une aide au positionnement latéral par rapport à un chemin de référence.

Dans un mode de réalisation, ces organes 106 comprennent des moyens pour percevoir l'environnement du véhicule. Ces moyens peuvent traiter des ondes lumineuses (caméra, laser, lidar ...), des ondes radio fréquences (RADAR, Wifi, 4G, 5G, xG ...) et des ondes acoustiques (ultrasons, ...). Ces organes 106 sont alors aptes à communiquer avec l'extérieur du véhicule (avec d'autres véhicule, avec des objets connectés comme par exemple un téléphone, un ordinateur ..., avec des stations sur le bord de la route, avec des serveurs, ...). En particulier, ces organes 106 peuvent reconnaître une voie de circulation, les bords de route et les marquages au sol, les objets (piéton, cycliste, automobile, camion ...) circulant aux abords ou sur la voie de circulation autour du véhicule ;

Dans un mode de réalisation, le véhicule 101 comporte au moins un dispositif 107, calculateur par exemple, comprenant une mémoire associée à au moins un processeur configuré pour mettre en œuvre l'invention.

Dans un mode de réalisation, le dispositif 107 conduit de façon automatisé le véhicule 101 sur une voie de circulation selon un chemin de référence. Le dispositif 107 comportent des organes de perception de l'environnement, d'interfaces homme-machine, et de contrôle du véhicule 101.

Les organes de perception de l'environnement sont aptes à :
- percevoir l'environnement extérieur ou routier à l'aide des organes de type RADAR, LIDAR, ultrason, laser, acquisition d'images/vidéo, ou autre télépmètres ;
- percevoir l'environnement intérieur du véhicule 101 à l'aide d'organes de type capteurs de positions, caméra, dispositifs de surveillance du conducteur et/ou des passagers.

Les organes d'interface homme-machine sont aptes à :
- communiquer avec le conducteur et/ou les passagers afin de soit informer les occupants dudit véhicule 101, soit de recevoir des volontés ou des ordres des occupants dudit véhicule 101 ;
- communiquer avec les autres véhicules, avec l'infrastructures, avec des personnes hors du véhicule 101 à l'aide de communications dites V2X basées sur des technologies sans fils comme le WIFI, la 4G, la 5G, afin de soit informer soit de recevoir des informations des autres véhicules, de l'infrastructure et/ou avec des personnes hors dudit véhicule 101.

Les organes de contrôle du véhicule 101 sont aptes à contrôler, commander ou réguler :
- la dynamique longitudinale, transversale et/ou verticale dudit véhicule 101 (par exemple, ces organes peuvent être des freins, la direction les suspensions, le moteur, ...) ;
- le confort et la sécurité du véhicule 101.

Des canaux de communications 108 et 109 illustrent en partie les communications et échanges d'information sur un réseau informatique de type filaire comme les réseaux CAN, FlexRay, Ethernet, ..., de type optique, ou de type radiofréquence comme le wifi, 4G, 5G, ... Ces canaux de communications permettent les échanges d'informations entre le dispositif 107 et les autres organes (fauteuil 102, ceinture de sécurité, volant 103, tableau de bord 104, système multi média, voyants, écrans, climatisation/ventilation, organes d'aide à l'assistance à la direction 105, organes 106 aptes à conduire le véhicule 101 et tout dispositif 107 participant à la mise en œuvre de l'invention).

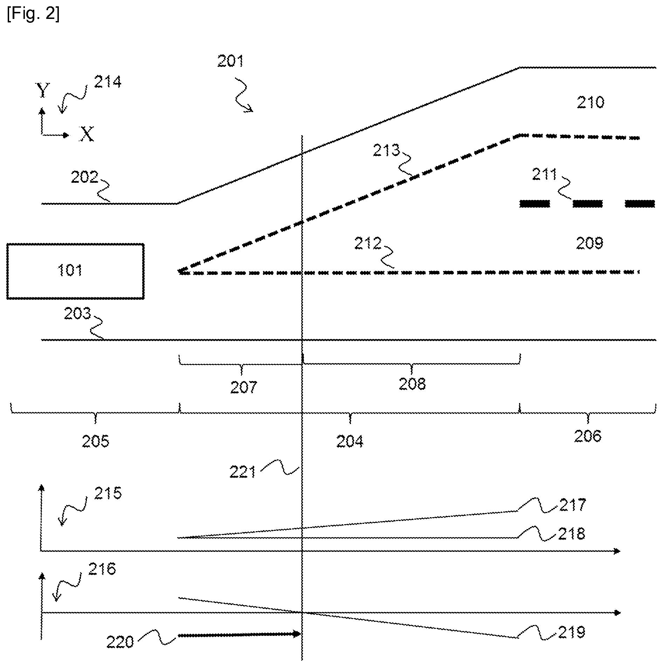

La **figure 2** montre le véhicule 101 circulant sur une voie de circulation 201 délimitée par deux bords, un bord gauche 202 et un bord droit 203.

La voie de circulation 201 est découpée en plusieurs zones. Une première zone 204 correspondant à la zone d'élargissement de la voie de circulation. Une zone amont 205 correspondant à la zone de la voie de circulation en amont de la zone d'élargissement 204. La voie de circulation en amont de la zone d'élargissement 204 est également dite voie initiale. Une zone aval 206 correspondant à la zone de la voie de circulation en aval de la zone d'élargissement 204. Le début de la zone d'élargissement 204 correspond à la fin de la zone amont 205. La fin de la zone d'élargissement 204 correspond au début de la zone aval.

La zone d'élargissement 204 est partitionnée en deux sous zones, une première sous zone 207 et une deuxième sous zone 208. La figure 2 montre une ligne de partitionnement sépare la première sous zone 207 de la deuxième sous zone 208.

La zone 206 en aval de la zone d'élargissement 204 est divisée en deux voies, dont une égo-voie 209 et une voie adjacente 210. La ligne 211 représente un marquage au sol séparant l'égo-voie 209 de la voie adjacente 210.

La figure 2 montre également le chemin de référence 212 pour atteindre l'égo-voie, et le chemin de référence 213 pour atteindre la voie adjacente.

La figure 2 montre trois repères 214, 215, 216. Le repère 214 donne un sens longitudinal et transversal permettant de réaliser les calculs de distance.

Un résultat du calcul d'une la première distance latérale 217 entre le chemin de référence de la voie adjacente 213 et le bord droit 203 de la voie de circulation est représenté dans le repère 215. Un résultat du calcul d'une deuxième distance latérale 218 entre le chemin de référence de l'égo-voie 212 et le bord droit 203 de la voie de circulation est également représenté dans le repère 215.

Dans le repère 216, un segment 219 représente le résultat d'une fonction de la première distance latérale 217 et de la deuxième distance latérale 218. A titre d'illustration, cette fonction est la somme de la deuxième distance latérale 218, d'une demie largeur de la voie initiale, et de l'opposé (signe inverse) de première distance latérale 217. La longueur d'un vecteur 220 représente le calcul de la distance longitudinale par rapport au début de ladite zone d'élargissement. Un trait 211 illustre la distance longitudinale reportée sur la zone d'élargissement 204.

La première sous zone 207, appartenant à la zone d'élargissement 204, est ainsi limitée transversalement par les bords 202 et 203, et est limitée longitudinalement par le début de la zone d'élargissement 204 et le trait 211.

Dans la figure 2, le chemin de référence utilisé par l'aide au positionnement latéral avant la zone d'élargissement n'est pas représenté.

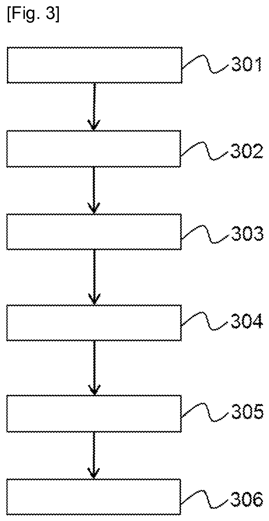

La **figure 3** illustre schématiquement un procédé d'aide au positionnement latéral d'un véhicule 101, selon un exemple particulier de réalisation de la présente invention. Un véhicule 101 propre à être conduit par un conducteur de façon automatisé selon un chemin de référence circule sur ladite voie de circulation, ladite voie de circulation est délimitée par deux bords 202, 203.

L'étape 301 détecte une prochaine division de la voie de circulation en au moins deux nouvelles voies supplémentaires, dont une égo-voie 209 et une voie adjacente 210.

Avantageusement, la détection est réalisée à partir des moyens pour percevoir l'environnement. Dans un mode de réalisation, le traitement d'images acquises par une caméra permet d'identifier, reconnaître et localiser le marquage au sol. La largeur de voie sur laquelle circule le véhicule sur un horizon est déterminée. La surveillance de la variation de la largeur de la voie est un indicateur de division de la voie. Également, le suivi du marquage au sol permet d'identifier une division de la voie avec l'apparition d'un marquage supplémentaire.

Avantageusement, la combinaison de mesures provenant de différents moyens pour percevoir l'environnement et de moyens pour se localiser (GPS associé à une cartographie par exemple) rend plus robuste la détection.

L'étape 302 détermine la zone d'élargissement 204 de la voie de circulation 201. Avantageusement, avec l'identification de marquage au sol et des bords de la voie et avec la surveillance de la largeur de la voie, la zone d'élargissement 204 est déterminée. Dans un mode de réalisation, cette détermination est consolidée et finalisée alors que le véhicule est dans la zone d'élargissement. Cette détermination est réactualisée pendant que le véhicule est dans la zone d'élargissement 204 lorsque de nouveaux éléments sont détectés comme un nouveau marquage marquant la séparation des voies crées par l'élargissement de la voie. Dans un autre mode de réalisation, la zone d'élargissement 204 est entièrement déterminée dès le début de l'entrée de cette zone à l'aide de dispositif de localisation associées à des cartographies, ou données géométrique, de la voie.

L'étape 303 détermine, dans ladite zone d'élargissement 204, des chemins de référence 212, 213 aptes à atteindre chaque nouvelle voie 209, 210. Dans un mode de réalisation, un chemin de référence 212 est déterminé pour atteindre l'égo-voie 209, et un autre chemin de référence 213 est déterminé pour atteindre la voie adjacente 210. Par égo-voie, on entend la voie préférentielle ou par défaut de l'aide au positionnement latéral lors d'une division de voie. Généralement, c'est la voie de droite en cas de circulation à droite ou la voie de gauche en cas de circulation à gauche. La voie adjacente est la voie à côté de l'égo-voie.

Selon un mode de réalisation, un chemin de référence 2112, 213 dans la zone d'élargissement 204 menant à une des voies 209, 210 issues de la division de la voie courante, peut être crée comme le chemin le plus court entre le chemin de référence de la voie juste avant la zone d'élargissement et le chemin de référence de la nouvelle voie après la zone d'élargissement.

Selon un autre mode de réalisation le chemin de référence est le plus court chemin qui respecte la courbure de la route et/ou des critères de planification de trajectoire (moindre distance, moindre accélération, moindre consommation, ...).

Selon un autre mode de réalisation, un premier chemin de référence est déterminé à partir du bord droit de la voie de circulation. A titre d'illustration, cette détermination peut correspondre à un écart transversal d'une demie largeur de la voie initiale par rapport au bord de la voie de circulation. Si la largeur de la voie la plus à droite parmi les nouvelles voies créées en sortie de la zone d'élargissement est identique à la largeur de la voie initiale, le premier chemin de référence relie le centre de la voie initiale au centre la voie la plus à droite parmi les nouvelles voies créées en sortie de la zone d'élargissement tout en respectant la courbure de la route.

Selon un autre mode de réalisation, un deuxième chemin de référence est déterminé à partir du bord gauche de la voie de circulation. A titre d'illustration, cette détermination peut correspondre à un écart d'une demie largeur de la voie initiale par rapport au bord gauche de la voie de circulation. Si la largeur de la voie la plus à gauche parmi les nouvelles voies créées en sortie de la zone d'élargissement est identique à la largeur de la voie initiale, le deuxième chemin de référence relie le centre de la voie initiale au centre la voie la plus à gauche parmi les nouvelles voies créées en sortie de la zone d'élargissement tout en respectant la courbure de la route.

Selon un autre mode de réalisation le chemin de référence pour atteindre l'égo-voie 209 est fonction du bord le plus proche de l'égo-voie. En particulier, le chemin de référence pour atteindre l'égo-voie 209 est un distance fixe, par exemple la largeur d'une demie voie, par rapport à la voie de droite en cas de circulation à droite et la voie de gauche en cas de circulation à gauche.

Selon un autre mode de réalisation le chemin de référence pour atteindre la voie adjacente 210 est fonction du bord le plus proche de la voie adjacente. En particulier, le chemin de référence pour atteindre la voie adjacente 210 est un distance fixe, par exemple la largeur d'une demie voie, par rapport à la voie de gauche en cas de circulation à droite et la voie de droite en cas de circulation à gauche.

L'étape 304 détermine d'une première 207 et d'une deuxième sous zone 208 de ladite zone d'élargissement fonction des chemins de référence 202, 203.

Selon un mode de réalisation, cette détermination est fonction de l'écart (différence transversale) entre chemin de référence pour atteindre l'égo-voie 212 et le chemin de référence de l'égo voie 212.

Selon un autre mode réalisation, le procédé comporte une étape de calcul d'une distance longitudinale par rapport au début de ladite zone d'élargissement, ladite distance longitudinale est fonction des chemins de référence 212, 213 et des bords 202, 203.

Dans un mode de réalisation, un des bords 202, 203 de la voie de circulation est sélectionné, par exemple le bord 202. Une première distance latérale 217 est calculée à partir d'un premier chemin de référence et du bord 202 sélectionné, cela correspond à l'écart latéral entre le premier chemin de référence et le bord 202 sélectionné. Une deuxième distance latérale 218 est calculée à partir du deuxième chemin de référence 213 et du bord 202 sélectionné. Cela correspond à l'écart latéral entre le deuxième chemin de référence 213 et le bord 202 sélectionné. Dans ce mode particulier, illustré sur la figure 2, la distance longitudinale est définie lorsque la différence entre la deuxième distance latérale 218 et la première distance latérale 217 et augmenté d'un décalage comme la demie largeur de la voie initiale devient négative.

Avantageusement, cette distance longitudinale est fonction de la géométrie du véhicule et en particulier de la largeur du véhicule. La distance longitudinale peut être plus grand pour un véhicule plus large. Un véhicule plus large dans la zone d'élargissement 204 laisse moins de place pour être dépassé.

Avantageusement, cette distance longitudinale est fonction de la géométrie de la voie de circulation. Par exemple en cas de variation non constant de la largeur voie de circulation la distance longitudinale devra être adaptée voire réduite à zéro. Avantageusement, cette distance longitudinale est fonction d'une marge, d'un décalage et/ou d'au moins une valeur prédéterminée. Dans un cas particulier, la distance longitudinale est définie lorsque la différence entre la première distance latérale 217 et la deuxième distance latérale 218 dépasse un seuil. Cela prend en compte des incertitudes sur les mesures utilisées pour les étapes de détection, de détermination et de calcul de l'invention. Dans un autre mode de réalisation, suivant la valeur prédéterminée, le procédé est plus ou moins réactif.

Avantageusement, cette distance longitudinale est fonction de la vitesse (position, accélération et/ou jerk) du véhicule. En particulier, une modification d'une aide à la conduite dans la première sous zone sera plus ressentie par le conducteur pouvant donner une impression d'inconfort ou de manque de sécurité.

Avantageusement, cette distance longitudinale est fonction des conditions de circulation. En particulier, lors de circulation dense, il est préférable de réduire la première sous zone 207.

Selon l'invention le procédé comporte une étape qui détermine une première sous zone 207 de la zone d'élargissement 204 comprise entre le début de la zone d'élargissement 204 et ladite distance longitudinale. La détermination de la deuxième sous zone 208 correspond au complément de la première sous zone 207 par rapport à la zone d'élargissement 204. Avantageusement, la sous zone 207 est la première partie longitudinale de la zone d'élargissement.

Lorsque le véhicule 101 est dans la première sous zone 207, l'étape 305 sélectionne un premier chemin de référence parmi les chemins de références déterminés, la sélection est faite à partir d'informations acquises par au moins un capteur du véhicule 101. Lorsque le véhicule 101 est dans la première sous zone 207, au moins deux chemins de références ont été déterminées : le chemin de référence pour atteindre l'égo-voie 212, et le chemin de référence pour atteindre la voie adjacente 213. Le procédé est ainsi apte à changer de chemin de référence ce qui entraine un changement de la trajectoire que va prendre le véhicule lorsque l'aide au positionnement latéral est activée.

Avantageusement, cette étape peut être activée plusieurs fois pour pouvoir changer la sélection du chemin de référence en fonction de nouvelles informations acquises par au moins un capteur du véhicule 101.

En particulier, une information acquise par au moins un capteur dudit véhicule est le côté activé du clignotant, un autre véhicule précédant et roulant plus lentement que ledit véhicule, une vitesse dudit véhicule inférieure à une consigne du véhicule, et/ou la position latérale dudit véhicule dans la zone d'élargissement de ladite voie de circulation. Ainsi, le positionnement latéral du véhicule sera différent en sortie de la première zone 207, sans action sensible (un angle volant, une vitesse de rotation volant, et/ou un couple volant mesuré inférieur à un seuil) sur le volant par le conducteur.

Lorsque le véhicule 101 est dans la deuxième sous zone 208, l'étape 306 sélectionne un deuxième chemin de référence parmi les chemins de références déterminés 212, 213, la sélection est faite uniquement à partir d'au moins une action sur le volant par le conducteur. En particulier, changer le positionnement latéral dans le deuxième sous zone 208 pour suivre un chemin de référence différent sans action du conducteur est inconfortable (transition brusque) et risqué (non prise en compte de la circulation venant par derrière ou déjà présente à côté du véhicule). C'est au conducteur de prendre le contrôle du positionnement latéral du véhicule en exerçant sensiblement un couple sur le volant et/ou une rotation du volant.

Avantageusement, cette étape peut être activée plusieurs fois pour pouvoir changer la sélection du chemin de référence en fonction de nouvelles actions sur le volant par le conducteur.

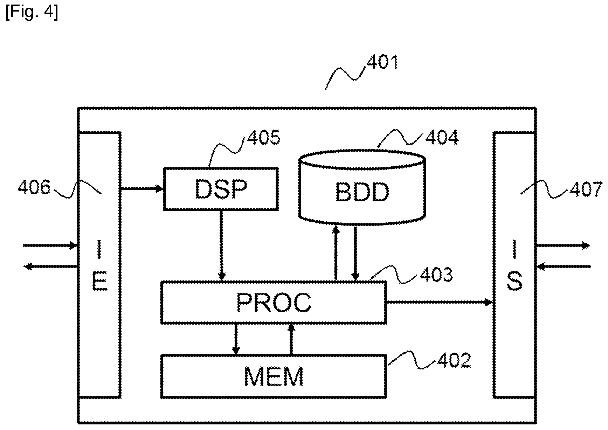

La **figure 4** représente un exemple de dispositif 401 de calculateur 107. Ce dispositif 401 peut être utilisé en tant que dispositif apte à mettre en œuvre les étapes du procédé selon l'invention. Ce dispositif 401 peut prendre la forme d'un boitier comprenant des circuits imprimés, de tout type d'ordinateur ou encore d'un téléphone mobile.

Le dispositif 401 comprend une mémoire vive (MEM) 402 pour stocker des instructions pour la mise en œuvre par un processeur (PROC) 403 du procédé de supervision tel que décrit ci-avant. Le dispositif 401 comporte aussi une mémoire de masse (BDD) 404 pour le stockage de données destinées à être conservées après la mise en œuvre du procédé.

Le dispositif 401 peut en outre comporter un processeur de signal numérique (DSP) 405. Ce DSP 405 reçoit des signaux numériques relatifs à des données pour mettre en forme, démoduler et amplifier, de façon connue en soi ces données.

Le dispositif 401 comporte également une interface d'entrée 406 pour la réception des données relevées par les capteurs du volant 103 du tableau de bord 104, du système d'assistance de direction 105, des organes 106 aptes à conduire le véhicule 101 de façon automatisé selon un chemin de référence sur une voie de circulation 201, et/ou du dispositif 107 qui comporte des organes de perception de l'environnement, d'interfaces homme-machine, et de contrôle du véhicule 101.

Le dispositif 401 comporte une interface de sortie 407 pour la transmission des données et informations calculées et/ou transformé par le procédé.

La présente invention ne se limite pas aux formes de réalisation décrites ci-avant à titre d'exemples ; elle s'étend à d'autres variantes comprises dans la portée des revendications annexées. En particulier, elle s'adapte dans le cas de division de plus de deux voies telle que, par exemple, à l'arrivée d'une zone de péage autoroutier.

## Revendications

1. Procédé d'aide au positionnement latéral d'un véhicule (101), ledit procédé étant mis en œuvre par un dispositif (401), ledit dispositif conduisant de façon automatisé ledit véhicule (101), propre à être conduit par un conducteur, sur une voie de circulation (201) selon un chemin de référence, ladite voie de circulation est délimitée par deux bords (202, 203), ledit procédé comprenant les étapes de :
• détection (301) d'une prochaine division de ladite voie de circulation en au moins deux nouvelles voies (209, 210) ;
• détermination (302) d'une zone d'élargissement (204) de ladite voie de circulation ;
• détermination (303), dans ladite zone d'élargissement, des chemins de référence (212, 213) aptes à atteindre chaque nouvelle voie (209, 210) ;
• calcul d'une distance longitudinale par rapport à un début de ladite zone d'élargissement (204), ladite distance longitudinale est fonction des chemins de référence (212, 213) et des bords (202, 203) ;
• détermination (304) d'une première (207) et d'une deuxième sous zone (208) de ladite zone d'élargissement fonction des chemins de référence (212, 213) et des bords (202, 203), la première sous zone (207) de ladite zone d'élargissement (204) étant comprise entre le début de ladite zone d'élargissement et ladite distance longitudinale, la deuxième sous zone (208) correspondant à un complément de ladite première sous zone (207) par rapport à la zone d'élargissement (204) ;
lorsque le véhicule (101) est dans la première sous zone, le procédé comporte en outre une étape (305) de sélection d'un premier chemin de référence parmi les chemins de référence déterminés (212, 213), la sélection est faite à partir d'informations acquises par au moins un capteur dudit véhicule ;
lorsque le véhicule (101) est dans la deuxième sous zone (208), le procédé comporte en outre une étape (306) de sélection d'un deuxième chemin de référence parmi les chemins de références déterminés (212, 213), la sélection est faite uniquement à partir d'au moins une action sur le volant par le conducteur.

2. Procédé d'aide au positionnement latéral d'un véhicule (101) selon la revendication 1, dans lequel lesdites informations acquises par au moins un capteur dudit véhicule est le côté, gauche ou droit, de l'activation du clignotant.

3. Procédé d'aide au positionnement latéral d'un véhicule (101) selon l'une des revendications 1 à 2, dans lequel lesdites informations acquises par au moins un capteur dudit véhicule est la détection d'un autre véhicule précédant et roulant plus lentement que ledit véhicule.

4. Procédé d'aide au positionnement latéral d'un véhicule (101) selon l'une des revendications 1 à 3, dans lequel lesdites informations acquises par au moins un capteur dudit véhicule est une vitesse dudit véhicule inférieure ou supérieure à une vitesse consigne.

5. Procédé d'aide au positionnement latéral d'un véhicule (101) selon l'une des revendications 1 à 4, dans lequel lesdites informations acquises par au moins un capteur dudit véhicule est la position latérale dudit véhicule dans la zone d'élargissement de ladite voie de circulation.

6. Procédé d'aide au positionnement latéral d'un véhicule (101) selon l'une des revendications 1 à 5, dans lequel l'action sur le volant par le conducteur est une rotation du volant et/ou un couple de rotation appliqué sur le volant.

7. Dispositif d'aide au positionnement latéral d'un véhicule (101), comprenant une mémoire associée à au moins un processeur configuré pour mettre en œuvre le procédé selon l'une des revendications 1 à 6.

8. Véhicule (101) comportant le dispositif d'aide au positionnement latéral d'un véhicule selon la revendication 7.

9. Programme d'ordinateur comprenant des instructions adaptées pour l'exécution des étapes du procédé d'aide au positionnement latéral d'un véhicule (101) selon l'une des revendications 1 à 6 lorsque ledit programme est exécuté par au moins un processeur (403).

## Patentansprüche

1. Verfahren zur Unterstützung der seitlichen Positionierung eines Fahrzeugs (101), wobei das Verfahren durch eine Vorrichtung (401) durchgeführt wird, wobei die Vorrichtung das Fahrzeug (101), das geeignet ist, von einem Fahrer geführt zu werden, automatisch auf einer Fahrspur (201) entlang einer Referenzstrecke führt, wobei die Fahrspur durch zwei Kanten (202, 203) begrenzt wird, wobei das Verfahren die folgenden Schritte umfasst:
- Erkennung (301) einer nächsten Teilung der Fahrspur in mindestens zwei neue Fahrspuren (209, 210);
- Bestimmung (302) eines Verbreiterungsgebiets (204) der Fahrspur;
- Bestimmung (303) der Referenzwege (212, 213) in der Erweiterungszone, die geeignet sind, jedes neue Gleis (209, 210) zu erreichen;
- Berechnung eines Längsabstands von einem Anfang des Verbreiterungsbereichs (204), wobei der Längsabstand eine Funktion der Referenzwege (212, 213) und der Ränder (202, 203) ist;
- Bestimmung (304) einer ersten (207) und einer zweiten Unterzone (208) der Verbreiterungszone in Abhängigkeit von den Referenzwegen (212, 213) und den Rändern (202, 203), wobei die erste Unterzone (207) der Verbreiterungszone (204) zwischen dem Beginn der Verbreiterungszone und dem Längsabstand liegt, wobei die zweite Unterzone (208) einer Ergänzung der ersten Unterzone (207) zu der Zone entspricht Erweiterung (204);
wenn sich das Fahrzeug (101) in dem ersten Unterbereich befindet, umfasst das Verfahren ferner einen Schritt (305) zum Auswählen eines ersten Referenzpfads aus den bestimmten Referenzpfaden (212, 213), wobei die Auswahl aus Informationen erfolgt, die von mindestens einem Sensor des Fahrzeugs erfasst werden;
wenn sich das Fahrzeug (101) im zweiten Unterbereich (208) befindet, umfasst das Verfahren ferner einen Schritt (306) zum Auswählen eines zweiten Referenzpfads aus den bestimmten Referenzpfaden (212, 213), wobei die Auswahl nur aus mindestens einer Lenkradeinwirkung durch den Fahrer erfolgt.

2. Verfahren zur Unterstützung der seitlichen Positionierung eines Fahrzeugs (101) nach Anspruch 1, wobei die von mindestens einem Sensor des Fahrzeugs erfasste Information die linke oder rechte Seite der Blinkaktivierung ist.

3. Verfahren zur Unterstützung der seitlichen Positionierung eines Fahrzeugs (101) nach einem der Ansprüche 1 bis 2, wobei die von mindestens einem Sensor des Fahrzeugs erfasste Information die Erfassung eines anderen Fahrzeugs ist, das dem Fahrzeug vorangeht und langsamer fährt als dieses.

4. Verfahren zur Unterstützung der seitlichen Positionierung eines Fahrzeugs (101) nach einem der Ansprüche 1 bis 3, wobei die von mindestens einem Sensor des Fahrzeugs erfasste Information eine Geschwindigkeit des Fahrzeugs ist, die kleiner oder größer als eine Sollgeschwindigkeit ist.

5. Verfahren zur Unterstützung der seitlichen Positionierung eines Fahrzeugs (101) nach einem der Ansprüche 1 bis 4, bei dem die von mindestens einem Sensor des Fahrzeugs erfasste Information die seitliche Position des Fahrzeugs in dem Verbreiterungsbereich der Fahrspur ist.

6. Verfahren zur Unterstützung der seitlichen Positionierung eines Fahrzeugs (101) nach einem der Ansprüche 1 bis 5, wobei die Wirkung des Fahrers auf das Lenkrad eine Lenkraddrehung und/oder ein Drehmoment ist, das auf das Lenkrad ausgeübt wird.

7. Vorrichtung zur Unterstützung der seitlichen Positionierung eines Fahrzeugs (101), die einen Speicher umfasst, der mindestens einem Prozessor zugeordnet ist, der zur Durchführung des Verfahrens nach einem der Ansprüche 1 bis 6 konfiguriert ist.

8. Fahrzeug (101) mit der Vorrichtung zur Unterstützung der seitlichen Positionierung eines Fahrzeugs nach Anspruch 7.

9. Computerprogramm, das Befehle umfasst, die zur Ausführung der Schritte des Verfahrens zur Unterstützung der seitlichen Positionierung eines Fahrzeugs (101) nach einem der Ansprüche 1 bis 6 angepasst sind, wenn das Programm von mindestens einem Prozessor (403) ausgeführt wird.

## Claims

1. Method for assisting the lateral positioning of a vehicle (101), said method being implemented by a device (401), said device automatically driving said vehicle (101), capable of being driven by a driver, on a taxiway (201) according to a reference path, said taxiway is delimited by two edges (202, 203), said method comprising the steps of:
- detection (301) of an upcoming division of the said taxiway into at least two new taxiways (209, 210);
- determination (302) of a widening zone (204) of the taxiway;
- determination (303), in the said enlargement zone, of the reference paths (212, 213) capable of reaching each new track (209, 210);
- compute of a longitudinal distance by report to a beginning of said widening zone (204), said longitudinal distance is a function of the reference paths (212, 213) and the edges (202, 203);
- determination (304) of a first (207) and a second sub-zone (208) of said widening zone as a function of the reference paths (212, 213) and the edges (202, 203), the first sub-zone (207) of said widening zone (204) being comprised between the beginning of said widening zone and said longitudinal distance, the second sub-zone (208) corresponding to a complement of said first sub-zone (207) by report to the Enlargement zone (204);
when the vehicle (101) is in the first sub-zone, the method further comprises a step (305) of selecting a first reference path, the determined reference paths (212, 213), the selection being made from information acquired by at least one sensor of said vehicle;
when the vehicle (101) is in the second sub-zone (208), the method further comprises a step (306) of selecting a second reference path according to the determined reference paths (212, 213), the selection is made solely from at least one task on the steering wheel by the driver.

2. Method for assisting with the lateral positioning of a vehicle (101) according to claim 1, wherein said information acquired by at least one sensor of said vehicle is the side, left or right, of the activation of the indicator.

3. Method for assisting with the lateral positioning of a vehicle (101) according to one of claims 1 to 2, in which the said information acquired by at least one sensor of the said vehicle is the detection of another vehicle preceding and driving more slowly than the said vehicle.

4. Method for assisting with the lateral positioning of a vehicle (101) according to one of claims 1 to 3, in which the said information acquired by at least one sensor of the said vehicle is a speed of the said vehicle less than or greater than a set speed.

5. Method for assisting with the lateral positioning of a vehicle (101) according to one of claims 1 to 4, in which the said information acquired by at least one sensor of the said vehicle is the lateral position of the said vehicle in the widening zone of the said taxiway.

6. Method for aiding the lateral positioning of a vehicle (101) according to one of claims 1 to 5, in which the task on the steering wheel by the driver is a rotation of the steering wheel and/or a torque applied to the steering wheel.

7. Device for assisting with the lateral positioning of a vehicle (101), comprising a memory associated with at least one processor configured to implement the method according to one of claims 1 to 6.

8. Vehicle (101) comprising the device for assisting the lateral positioning of a vehicle according to claim 7.

9. A computer plan comprising instructions adapted for carrying out the steps of the method for assisting the lateral positioning of a vehicle (101) according to one of claims 1 to 6 when said plan is carried out by at least one processor (403).
